# EUROPÄISCHE PATENTSCHRIFT

(11) **EP 2 461 037 B1**
(45) Veröffentlichungstag und Bekanntmachung des Hinweises auf die Patenterteilung: **22.04.2015**
(21) Anmeldenummer: 11009422.4
(22) Anmeldetag: 29.11.2011
(51) Int. Cl.: F04B 43/073, H02G 1/00, B23D 15/14

(54) **Hydraulischer Adapter**
Hydraulic adapter
Adaptateur hydraulique

(30) Priorität: 01.12.2010 IT BZ20100043; 03.11.2011 IT BZ20110052
(43) Veröffentlichungstag der Anmeldung: 06.06.2012
(73) Patentinhaber: INTERCABLE SRL, 39031 Brunico (BZ) (IT)
(72) Erfinder: Mutschlechner, Klaus, 39031 Brunico (Bolzano) (IT); Reichegger, Arnold, 39030 Uttenheim/Gais (Bolzano) (IT)
(74) Vertreter: Oberosler, Ludwig

(56) Entgegenhaltungen:
- WO-A1-2009/074180
- GB-A- 2 110 312
- US-A- 4 052 922

## Beschreibung

Um in Sicherheit Arbeiten, insbesondere Schnitte, an Kabeln aus Aluminium oder Kupfer elektrischer Leitungen mit beachtlichem Querschnitt (z.B. Ø 85mm), mittels hydraulisch betätigten Werkzeugen, durchzuführen, ist der Einsatz von Werkzeugen, insbesondere von elektrisch isolierten Kabelschneidvorrichtungen, bekannt. Der Einsatz dieser elektrisch isolierten Werkzeuge ist insbesondere dann der Fall, wenn die Spannungsfreiheit nicht garantiert werden kann, bzw. wenn diese nicht mit Sicherheit feststellbar ist, was z.B. an metallisch abgeschirmten Kabeln besonders schwierig ist.

Die Normen DIN EN 50340 (VDE 0682-661), betreffend hydraulische Kabelschneidgeräte - Geräte zur Verwendung an elektrischen Anlagen, definieren die Anforderungen und Prüfungen an Kabelschneidgeräten um den Anwender zu schützen und enthalten den Hinweis: "In einigen Ländern ist es zum Schneiden von unter Spannung stehenden Kabeln erforderlich, dass bei mehrphasigen Kabeln das Kabelschneidgerät zuerst einen einphasigen Kurzschluss zur Erde erzeugt, um die Schutzeinrichtung infolge eines einphasigen Fehlers auszulösen.

Die Normen CEI (Comitato Elettrotecnico Italiano), entsprechend DIN EN 50340, schreiben für isolierte Kabelschneider vor, dass der Schneidkopf des Kabelschneiders geerdet sein muss und dass zwischen der Pumpe und der Erde eine äquipotentiale Verbindung hergestellt werden muss. Die besagten Vorkehrungen müssen außerdem unter Beachtung der nationalen Richtlinien durchgeführt werden. In Deutschland kann z.B., gemäß der Richtlinien "BGI 845-ZH1 / 437" (Berufsgenossenschaft der Feinmechanik und Elektrotechnik - Nov. 2002), der Kabelschneider nicht geerdet werden, weil die Netze selbst bereits geerdet sind. Es muss allerdings (gemäß Absatz "4.5- Erdung des Schneidkopfes") eine äquipotentiale Verbindung zwischen der, das Werkzeug betätigenden, Hydraulikpumpe und der Erde hergestellt werden.

Die bekannten Kabelschneidvorrichtungen bestehen aus einer (z.B. elektrisch oder mittels Pedal betriebenen) öldynamischen Pumpe, aus einem Schneidkopf mit Zylinder und Arbeitskolben und aus einem biegsamen Verbindungsschlauch zwischen Pumpe und Schneidkopf. Das Öl welches für die besagten Vorrichtungen verwendet wird, ist aus Sicherheitsgründen elektrisch isolierend und der Verbindungsschlauch hat kein Drahtgeflecht und ist aus diesem Grund nur für einen begrenzten Arbeitsdruck von ca. 625 bar geeignet. Um weiters die Sicherheit zu gewähren sind die Schneidköpfe, wie auch der Verbindungsschlauch, als auch die öldynamische Pumpe, mit Kupplungen versehen welche mit jenen für nicht Sicherheits-Schneidköpfe oder dergleichen nicht kompatibel sind, um dadurch absolut zu verhindern, dass Sicherheits-Schneidköpfe mit nicht isolierendem Öl und/oder über ungeeignete Verbindungsschläuche mit Drahtgeflecht betrieben werden können.

Aus der US 4,052,922 ist ein Kabelschneidgerät bekannt wobei der Schneidmeißel, infolge Zünden einer Sprengkapsel, betätigt wird. Der federbelastete Schlagbolzen der Zündvorrichtung wird über einen Kabelzug ausgelöst welcher seinerseits durch einen Kolben betätigt wird der in einem Zylinder durch Scherstifte in einer mittleren Position gehalten wird. Dieser Zylinder ist am unteren Ende dicht und enthält zwischen Kolben und unterem Zylinderkopf einen Luftpolster um als "hydrodynamischer Sensor" zu wirken. Der obere Teil des Zylinders weist Öffnungen auf durch welche, z.B. Wasser wirken kann wenn der Sensor ins Wasser getaucht wird. Bei Anstieg des Wasserdrucks auf den Kolben infolge einer Druckwelle oder Absenken des "Sensors" in eine bestimmte Tiefe, werden die Scherstifte abgeschert, das Luftpolster wird komprimiert und der Zündmechanismus wird über Kabelzug aktiviert. Eine derartige als "hydrodynainischer Sensor" bezeichnete Vorrichtung ist nicht für die Betätigung hydraulisch betriebener Kabelschneidköpfen geeignet weil der Kolben mit einer mechanischen Verbindung ausgestattet ist und weil die auslösende Druckbeaufschlagung des Kolbens nicht progressiv und regelbar erfolgt.

Aus der WO 2009/074180 ist ein Pumpensteuersystem bekannt welches von einem Gehäuse mit einem flexiblen Membran Gebrauch macht um durch Steuern eines Ölkreislaufes die Fördermenge eines Flüssigkeitskreislaufes zu steuern. Dieses Gehäuse ist einerseits des Membrans mit dem Vorlauf und dem Rücklauf einer Ölpumpe verbunden während es an der Gegenseite des Mambrans mit dem Vorlauf und dem Rücklauf der Flüssigkeitspumpe verbunden ist. Der Membran ist derart angeordnet, dass durch seine elastische Verformung der Durchfluss der Flüssigkeit beeinflusst wird. Der Betrieb eines hydraulischen Schneidkopfes mit elektrischer Trennung zwischen Antriebspumpe und Schneidkopf mittels einem derartigen Gefäß ist nicht möglich.

Aus der GB 2110312 ist eine Membranpumpe bekannt bei welcher die Fördermenge durch Verändern des Volumens einer Dämpfkammer mittels einer, auf einen elastischen Membran wirkender, verstellbarer Scheibe variiert werden kann. Diese Dämpfkammer mit verstellbarer Scheibe für den Membran ist nicht für den Antrieb hydraulischer Kabelschneidköpfe mit elektrischer Trennung zwischen Antriebspumpe und Schneidkopf geeignet.

Die Erfindung stellt sich die Aufgabe einen Adapter zu realisieren mittels welchem, in absoluter Sicherheit, ein Sicherheits-Kabelschneidkopf, ein Sicherheits-Presskopf oder dergleichen, durch eine öldynamische Pumpe für die Betätigung von Werkzeugköpfen welche, betreffend deren Anwendung an Spannung führenden Teilen, nicht den Sicherheitsbedingungen genügen, betrieben werden kann.

Zur Lösung dieser Aufgabe schlägt die Erfindung einen hydraulischen Adapter vor, welcher einerseits an eine öldynamische Pumpe angeschlossen ist welche, samt dem entsprechenden Verbindungsschlauch und dem Öl, nicht den elektrischen Sicherheitsbedingungen entspricht und anderseits, über einen den elektrischen Sicherheitsbedingungen entsprechenden Schlauch mit elektrisch isolierendem Öl an einen Kabelschneidkopf oder einen Presskopf angeschlossen ist welcher den elektrischen Sicherheitsbedingungen entspricht. Der obgenannte Sicherheitsschlauch unterscheidet sich wesentlich dadurch dass er ohne Drahtgeflecht ist und aus diesem Grund nur einem niedrigeren Arbeitsdruck von ca. 625 bar standhält.

Erfindungsgemäß besteht der hydraulische Adapter wesentlich aus zwei zylinder-oder kalottenförmigen Gefäßen welche unter sich koaxial an ihrer offenen Seite miteinander verbunden sind und in ihrem Inneren einen axial verschiebbaren Kolben, bzw. einen elastisch verformbaren Membran aufnehmen. Der Kolben, bzw. der Membran, bewirkt durch seine Verschiebung, bzw. Verformung, die direkt proportionale Veränderung des Volumens in einem der Gefäße in Bezug auf das Volumen im zweiten Gefäß. Kopfseitig sind die Gefäße mit einer Schlauchkupplung ausgestattet, an einer Seite für den Anschluss eines Schlauches mit Drahtgeflecht welcher mit der öldynamischen Pumpe verbunden ist und an der entgegengesetzten Seite für den Anschluss eines Sicherheits-Schlauchs ohne Drahtgeflecht welcher am Sicherheits-Kabelschneidkopf angeschlossen ist. Dadurch ergeben sich zwei öldynamisch getrennte Kreisläufe, ein erster Betätigungskreislauf mit Pumpe welcher mit nicht elektrisch isolierendem Öl betrieben wird und ein zweiter Arbeitskreislauf mit Sicherheits-Kabelschneidkopf und Sicherheits-Schlauch welcher mit elektrisch isolierendem Öl betrieben wird. Durch die Verschiebung des Kolbens, bzw. durch die Verformung des Membrans, wird der durch die Pumpe im Betätigungskreislauf erzeugte Druck auf das isolierende Öl im Arbeitskreislauf übertragen.

Erfindungsgemäß können die beiden, den Adapter bildenden, Gefäße metallisch, also elektrisch leitend, oder über einen elektrisch isolierenden Teil, verbunden sein. Ebenso kann der Kolben eventuell aus zwei Metallteilen bestehen welche über einen dazwischen angeordneten, nicht leitenden, Teil verbunden sind. Es bietet sich auch die Möglichkeit an, dass metallische Teile des Adapters mit einer elektrisch isolierenden Beschichtung verwendet werden um am Adapter eine elektrische Trennung zwischen dem Antriebsteil und dem Arbeitsteil herzustellen, obwohl der Adapter, bereits durch den Sicherheits-Schlauch und das elektrisch isolierende Öl, in Bezug auf den, eventuell Spannung führenden, durchzuschneidenden Kabel, elektrisch getrennt ist und eventuell zusätzlich geerdet werden kann.

Vorteilhafterweise ist an jener Seite des Adapters welche mit isolierendem Öl betrieben wird ein Manometer angebracht um den Druck überprüfen zu können welcher natürlich nicht den maximalen Arbeitsdruck des Sicherheits-Schlauches ohne Drahtgewebe überschreiten darf. Erfindungsgemäß kann auch die projizierte Fläche des Kolbens auf der Antriebsseite, in Bezug auf jener auf der Arbeitsseite, vermindert werden so dass, auch bei maximaler Druckbeaufschlagung durch die Pumpe, auf der Arbeitsseite nicht der maximale Arbeitsdruck des Sicherheits-Schlauches überschritten wird.

Weiters kann der Adapter an der Arbeitsseite mit einem Sicherheitsventil ausgestattet sein welches, sobald der maximale Arbeitsdruck des Sicherheits-Schlauches überschritten wird, öffnet; vorteilhafterweise erreicht das durch dieses tarierte Sicherheitsventil eventuell abfliesende Öl einen kleinen elastischen balgförmigen Tank und wird über ein Rückflussventil während der, durch eine Rückholfeder bestimmte, Öffnungsfase des Kabelschneidkopfes, bzw. durch eine im Adapter vorgesehene Rückstellfeder, in Richtung Zylinder, bzw. Kalotte angesaugt.

Im Falle des Adapters mit Membran, ist der Funktionsablauf der selbe wie der oben beschriebene, auch der Membran kann, wie der Kolben, mit einer Rückholfeder versehen sein, ohne auszuschließen, dass der Membran durch seine eigene Elastizität die Tendenz hat die Ausgangsposition, nahe an der Innenfläche jener Kalotte, welche mit der Pumpe verbunden ist, einzunehmen.

Erfindungsgemäß kann der Adapter mit dem Sicherheits-Kabelschneidkopf oder Presskopf direkt, ohne Verbindungsschlauch, verbunden sein so dass dieser, über einen traditionellen Verbindungsschlauch mit Drahtgeflecht, durch eine Pumpe welche nicht den elektrischen Sicherheitsbedingungen entspricht, in absoluter Sicherheit betrieben werden kann.

Gemäß einer Weiterentwicklung der Erfindung kann der im Zylinder verschiebbare Kolben mit einem Anzeigestab ausgestattet sein durch welchen der Bediener feststellen kann ob der Kolben, innen im Zylinder, z.B. nach der Durchführung mehrerer Schnitte, die Ausgangsstellung für den nächsten Schnitt einnimmt. Der Anzeigestab wird durch den Kolben verschoben so dass sein freies Ende aus dem Kopfteil des Zylinders vorsteht wenn der Kolben seine Ausgangsposition einnimmt. Dies um zu verhindern, dass ein Schnitt an einem Spannung führenden Kabel nur teilweise ausgeführt wird, was einer Querschnittsverminderung des Kabels entsprechen würde. Eine derartige Querschnittsverminderung könnte die Erhitzung des Kabels an der angeschnittenen Stelle, ein Durchschmelzen und auch die Bildung eines Lichtbogens verursachen, was zur Beschädigung des Schneidkopfes führen kann und für den Bediener eine Gefahrenquelle darstellen würde. Weiters kann erfindungsgemäß die Konstruktion des Adapters so ausgelegt sein, dass Leckstellen an den innenliegenden Dichtungen angezeigt werden indem das Öl von der Leckstelle nach außen geleitet wird wo es vom Bediener feststellbar ist. Diese Anzeige eventueller Leckstellen ist von besonderer Bedeutung weil es vorkommen könnte, dass das nicht isolierende Öl aus dem Antriebsteil des Adapters sich mit dem isolierenden Öl im Arbeitsteil des Adapters vermischt, wodurch die elektrische Trennung des Adapter und der damit verbundenen Pumpe nicht mehr gegeben wäre, wenn auch dadurch die Funktionstüchtigkeit des Kabelschneidkopfes nicht beeinträchtigt würde. Die Anzeige eventueller innerer Leckstellen kann erfindungsgemäß dadurch gelöst werden, dass das Öl über eine ringförmige Rille und Bohrungen am Kolben aus dem Mittelbereich zwischen den Dichtungen für das nicht isolierende Öl im Antriebsbereich einerseits und dem isolierenden Öl im Arbeitsbereich anderseits, in den Bereich des Anzeigestabes geleitet wird und, entlang dieses Stabes, nach außen geleitet wird wo es sichtbar ist.

Falls der Adapter aus zwei Kalotten mit Membran besteht, kann die Ausgangsstellung des Membrans, anliegend an der Kalotte des Antriebsteils, dadurch angezeigt werden, dass der Membran auf einen, an jener Kalotte welche an die Pumpe angeschlossen ist verschiebbar gelagerten, mit Rückstellfeder ausgestatteten, Stift drückt um so durch das außen an der Kalotte vorstehende Stiftende zu signalisieren, dass der Membran sich in Ausgangsstellung für den nächsten durchzuführenden Schnitt befindet.

Die Erfindung wird anschließend anhand einiger, in den beigelegten Zeichnungen schematisch dargestellten, vorzuziehenden Ausführungsbeispielen eines erfindungsgemäßen hydraulischen Adapters näher erklärt, dabei erfüllen die Zeichnungen rein erklärenden, nicht begrenzenden, Zweck.

Die Fig. 1 zeigt ein Funktionsschema eines erfindungsgemäßen hydraulischen Adapters, bestehend aus koaxialen, sich gegenüberliegenden Zylindern mit dazwischenliegendem elektrisch isolierendem Element in welchen sich zwei, über steife Kolbenstangen mit dazwischengelegtem isolierendem Element, verbundene Kolben, bewegen.

Die Fig. 2 zeigt das selbe in Fig. 1 dargestellte Funktionsschema mit den beiden, ohne Kolbenstange, über ein elektrisch isolierendes Element, verbundenen Kolben; dabei hat dieses isolierende Element ca. gleichen Durchmesser wie die beiden Kolben.

Die Fig. 3 zeigt das Funktionsschema eines erfindungsgemäßen hydraulischen Adapters mit Zylindern ohne Zwischenlage eines elektrisch isolierenden Elementes in welchem ein einziger Kolben, ohne Zwischenlage eines isolierenden Elementes, sich bewegt.

Die Fig. 4 zeigt ein Funktionsschema eines erfindungsgemäßen hydraulischen Adapters bestehend aus zwei entgegengesetzt angeordneten Kalotten mit dazwischengelegtem innerem Membran aus elastischem und elektrisch isolierendem Werkstoff.

Die Fig. 5 zeigt einen Längsschnitt durch einen erfindungsgemäßen hydraulischen Adapter mit Anzeigestab und Anzeige eventueller innerer Leckstellen, mit dem Kolben in maximaler Rückzugstellung wobei das freie Ende des Anzeigestabes aus dem Zylinderkopf vorsteht.

Die Fig. 6 zeigt einen Längsschnitt durch den in Fig. 5 gezeigten, erfindungsgemäßen Adapter mit dem innenliegenden Kolben in einer Position in welcher der, isolierendes Öl enthaltende, Zylinderraum reduziert ist, wobei das freie Ende des Anzeigestabes innen in die Bohrung des Sitzes zurückgezogen ist und somit von außen nicht sichtbar ist.

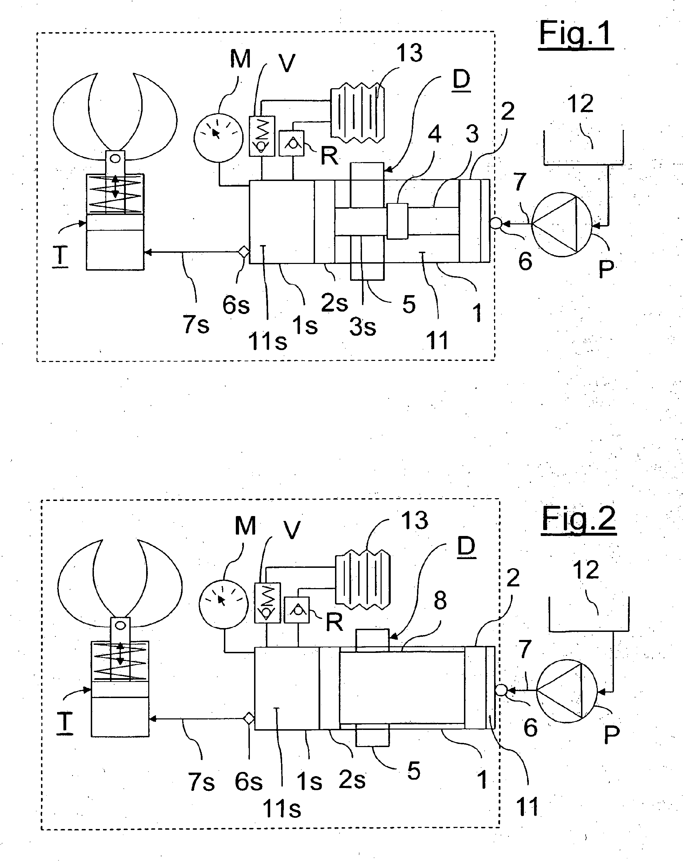

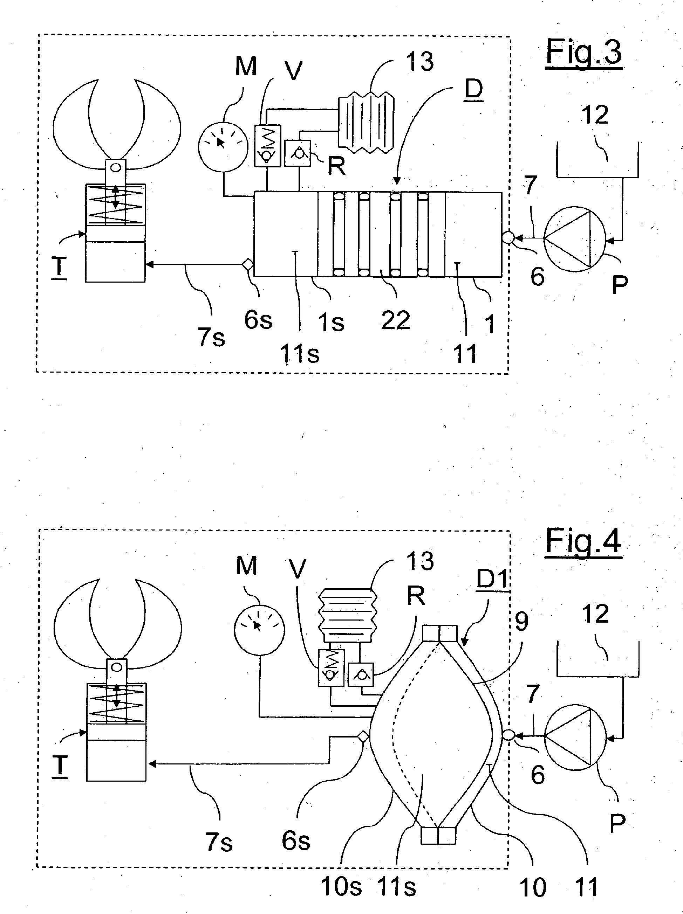

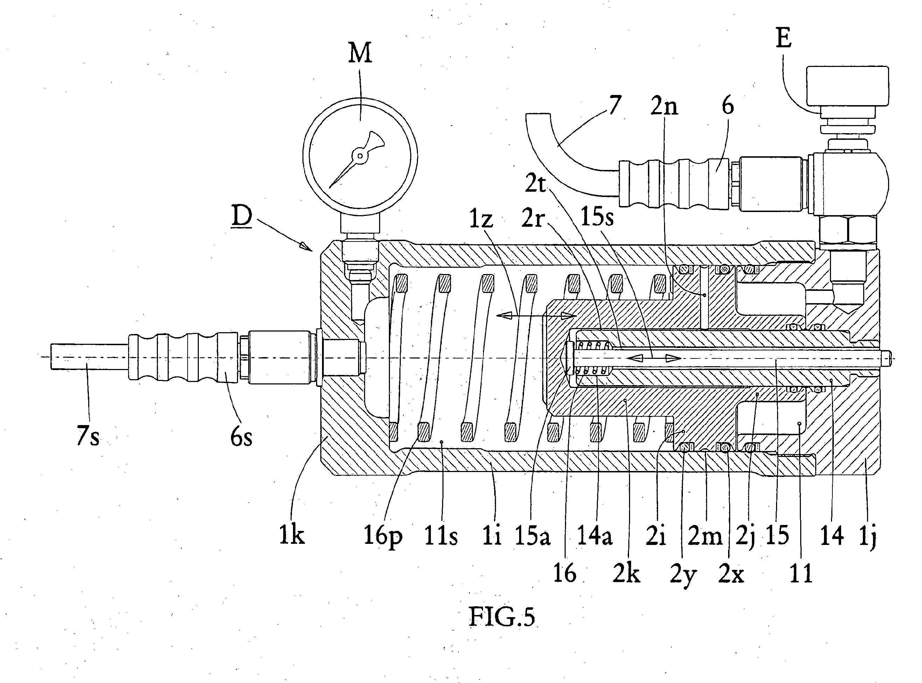

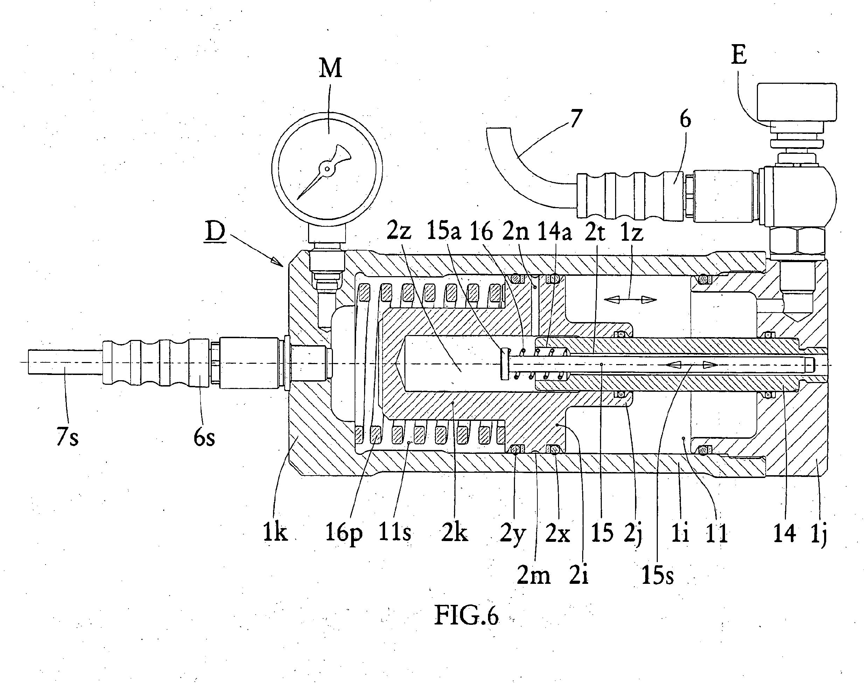

Der Sicherheits-Kabelschneidkopf T ist von bekannter Art und wird mit elektrisch isolierendem Öl betrieben, der Zylinder dieses Schneidkopfes T ist über einen Sicherheitsschlauch 7s ohne Drahtgeflecht (maximaler Arbeitsdruck ca. 625 bar) und einer Schlauchkupplung 6s mit dem arbeitsseitigen Teil des erfindungsgemäßen Adapters D verbunden, während der antriebsseitige Teil des Adapters D über eine Schlauchkupplung 6 und einem Schlauch mit Drahtgeflecht mit der öldynamischen Pumpe P verbunden ist welche ihrerseits mit einem Tank 12 für nicht elektrisch isolierendes Öl verbunden ist.. Der Adapter D kann aus zwei entgegengestzt angeordneten Zylindern 1, 1 s mit oder ohne Zwischenlage eines elektrisch isolierenden Elementes 5 (Fig, 1. 2), aus einem einteiligen Zylinder 1 i (Fig. 5, 6) oder auch aus zwei Kalotten 10, 10s mit Membran 9, bestehen. Im zusammengesetzten oder einteiligen Zylinder 1, 1s; 1i sind zwei, über starre Kolbenstangen 3, 3s, mit oder ohne Zwischenlage eines elektrisch isolierenden Elementes 4, verbundene Kolben 2, 2s, vorgesehen (Fig. 1). Diese Kolben 2, 2s können auch, ohne Kolbenstangen, über ein isolierendes Element 8 welches eventuell gleichen Durchmesser wie die Kolben hat, verbunden sein (Fig. 2) oder aus einem einzigen Kolben 22, 2i bestehen (Fig. 3; 5, 6). Der Adapter D wird durch die Kolben 2, 2s, bzw. den Kolben 22, 2i, bzw. durch den Membran 9, in einen mit normalem Hydrauliköl über eine Pumpe P befüllten Antriebsteil und einen mit isolierendem Öl gefüllten und mit dem Kabelschneidkopf T verbundenen Arbeitsteil, unterteilt. Dabei umfasst der Antriebsteil jeweils den Hubraum 11 und der Arbeitsteil den Hubraum 11 s.

Der Zylinder 2s, 2i des Adapters D, bzw. die Kalotte 10s des Adapters D1, kann am Arbeitsteil mit einem Manometer M und/oder mit einem tarierten Sicherheitsventil V ausgestattet sein um zu verhindern dass im, mit isolierendem Öl funktionierenden Arbeitsteil und im entsprechenden Verbindungsschlauch 7s ohne Drahtgeflecht, der höchst zulässige Arbeitsdruck des genannten Schlauches überschritten wird. Vorteilhafterweise kann das Sicherheitsventil V mit einem elastischen, z.B. balgförmigen Tank 13, verbunden sein in welchen, das vom Ventil V ausströmende Öl fließen kann; dieses Öl kann anschließend, nach jedem durchgeführten Schnitt, während der Rückstellbewegung des Kolbens, über ein Rückflussventil R wieder in den Hubraum 11s fließen. Die selbe Anordnung eines Sicherheitsventils V, eines Tanks 13 und eines Rückflussventils R kann an der Kalotte 10s des Adapters D1 vorgesehen werden.

Erfindungsgemäß kann auch die projizierte Fläche des Kolbens auf der Seite des Antriebsteils kleiner bemessen sein als die projizierte Fläche des selben Kolbens auf der Seite des Arbeitsteils um dadurch zu verhindern, dass der im Antriebsteil durch die Pumpe P erzeugte Druck sich mit voller Wirkung über den Kolben, bzw. über die Kolben, auf den Arbeitsteil wirkt, was bei fehlendem Sicherheitsventil V oder bei Nichtbeachtung des angezeigten Druckes am Manometer M, zum Platzen des Sicherheits-Schlauches 7s führen könnte.

Der Zylinder 1 i (Fig. 5, 6) ist an einer Seite durch die Wand 1 k verschlossen welche ein Überprüfungs-Manometer M und ein Kupplungsstück 6s für den Sicherheits-Schlauch 7s ohne Drahtgewebe, zwecks Verbindung mit dem, durch isolierendes Öl aus dem Raum 11 s des Zylinders 1 i betriebenen Kabelschneidkopf, trägt. Am entgegengesetzten Ende ist der Zylinder 1 i durch das Kopfteil 2j verschlossen welches mit einem koaxialen Rohrelement 14 versehen ist, in dessen Längsbohrung mit einem gewissen Spiel 2t ein Anzeigestab 15 verschiebbar 15s gelagert ist, dieser weist am innenliegenden Ende einen Kopf 15a auf während das entgegengesetzte Ende durch eine auffallende Farbe gut sichtbar gestaltet ist. In einem Sitz 14a am innenliegenden Endbereich des Rohrelementes 14 ist eine schraubenförmige Druckfeder 16 eingesetzt welche am Kopf 15a des Anzeigestabes 15 anliegt. Am Zylinderkopfteil 1 j ist weiters das Kupplungsstück 6 für den Schlauch (mit Drahtgeflecht) für die Verbindung mit der Pumpe (ohne elektrischer Sicherheit) vorgesehen. Der Anschluss des besagten Kupplungsstückes 6 kann mit einer Handschraube E für den Anschluss eines Erdungskabels versehen sein.

Innen im Zylinder 1i ist axial gleitend 1z ein einziger Kolben 2i vorgesehen welcher, gegen den Zylinderkopfteil 1 j, mit einem offenen rohrförmigen Ansatz 2j und, gegen der Wand 1 k des Zylinders, mit einem geschlossenen rohrförmigen Ansatz 2k, versehen ist. Der rohrförmige offene Ansatz 2j gleitet, mit Zwischenlage mindestens einer Dichtung, am innenliegenden Rohrelement 14. Der besagte Kolben 2i bildet im Inneren des Zylinders 1 i einen Hubaum 11 für das nicht isolierende Öl welcher, über das Kupplungsstück 6 und dem Schlauch 7, mit der Pumpe verbunden ist und einen Hubraum 11s für das isolierende Öl welcher, über das Kupplungsstück 6s und dem Schlauch 7s, mit dem Kabelschneidkopf verbunden ist. Der besagte Kolben 2i ist, zwischen einer Dichtung 2x für den Hubraum 11 und einer Dichtung 2y für den Hubraum 11s, mit einer ringförmigen Rille 2m versehen. Die besagte ringförmige Rille 2m ist, über mindestens eine radiale Bohrung 2n, mit dem Raum 2z, innen in den beiden rohrförmigen Ansätzen 2k und 2j, des Kolbens verbunden, dieser Raum 2z kommuniziert seinerseits über den Zwischenraum 2t des Spiels zwischen dem Rohrelement 14 und der Anzeigestange 15 oder über Längsrillen an der Anzeigestange 15 und/oder an der Innenfläche der rohrförmigen Ansätze 2j, 2k des Kolbens 2i, mit außen. Um den Kolben 2i, nach jedem Schnitt, in die Ausgangsstellung rückzuführen und damit den Hubraum 11 für das nicht isolierende Öl auf ein Minimum zu reduzieren, ist innen im Hubraum 11 eine schraubenförmige Druckfeder 16p vorgesehen welche zwischen der Wand 1k des Zylinders 1i und dem Kolben 2i wirkt.

Die projizierte Fläche des Kolbens 1i auf der Seite des Hubraumes 11 mit nicht isolierendem Öl ist, gegenüber der projizierten Fläche des selben Kolbens auf der Seite des Hubraumes 11 s mit isolierendem Öl, kleiner; dies wegen der Präsenz des Rohrelementes 14 mit einem bestimmten Querschnitt innerhalb des Hubraumes 11. Dies bringt mit sich, dass der Höchstdruck, z.B. von ca. 700 bar welcher von der, über dem Schlauch 7 mit Drahtgeflecht, verbundenen Pumpe erzeugt wird und auf den kleineren projizierten Querschnitt des Kolbens 1 i wirkt, im Hubraum 11s, wo ein größerer projizierter Querschnitt des Kolbens wirkt, das Erreichen eines niedrigeren Druckes, z.B. von maximal ca. 625 bar, bewirkt, wobei dieser Druck den maximalen Arbeitsdruck des Sicherheits-Schlauch 7s ohne Drahtgeflecht und des Sicherheits-Kabelschneidkopfes, nicht überschreitet. Der Druck welcher auf das isolierende Öl wirkt ist jedenfalls mittels Manometer M überprüfbar und vorteilhafterweise kann zusätzlich ein, entsprechend dem maximalen Arbeitsdruck des Schlauches 7s ohne Drahtgewebe und des damit verbundenen Kabelschneidkopfes, tariertes Sicherheitsventil S vorgesehen.

## Patentansprüche

1. Hydraulischer Adapter für den sicheren Betrieb, mittels öldynamischer Pumpe, von Kabelschneidköpfen, Pressköpfen oder dergleichen Werkzeugköpfen welche den elektrischen Sicherheitsbestimmungen entsprechen und welche an, eventuell Spannung führende, Kabel angesetzt werden, wobei der Adapter (D, D1) aus einem einteiligen oder einem zusammengesetzten Gefäß (1, 1s; 1i /10, 10s) besteht welches innen, durch einen frei gleitenden dichtenden einteiligen oder zusammengesetzten Kolben (2, 2s; 22; 2i) oder durch einen elastisch verformbaren Membran (9), in zwei zueinander koaxiale Hubräume (11, 11s) geteilt **dadurch gekennzeichnet dass** wird, einer (11) dieser Hubräume (11, 11s) durch eine Pumpe (P) mit nicht elektrisch isolierendem Öl gespeist wird während der andere (11s) mit elektrisch isolierendem Öl gefüllt ist und über einen Sicherheits-Verbindungsschlauch (7s) mit einem austauchbaren Werkzeugkopf (T) verbunden ist.

2. Hydraulischer Adapter gemäß Anspruch 1, **dadurch gekennzeichnet, dass** das Gefäß des Adapters (D) aus einem einzigen Zylinder (1i) oder aus zwei zueinander koaxialen Zylindern (1, 1s) zusammengesetzt ist, dass innen im Gefäß ein einteiliger Kolben (22, 2i) oder ein zusammengesetzter Kolben (2, 2s), gemäß der Langsachse des Gefäßes gleitet und dass, im Falle des zusammengesetzten Zylinders (1, 1s) und im Falle des zusammengesetzten Kolbens (2, 2s) dieser ein dazwischengelegtes, elektrisch isolierendes Element (4, 5) umfassen kann.

3. Hydraulischer Adapter gemäß Anspruch 1, **dadurch gekennzeichnet, dass** das Gefäß des Adapters (D1) aus zwei zueinander koaxial verbundenen Kalotten (10, 10s) besteht, dass der Membran (9) zwischen den Kalotten (10, 10s) eingebaut ist und dass dieser Membran (9) aus elektrisch isolierendem Werkstoff ist.

4. Hydraulischer Adapter gemäß Anspruch 1, **dadurch gekennzeichnet, dass** vom Kopf (1j) des Zylinders (1 i), auf der Seite des Hubraumes (11) mit isolierendem Öl, koaxial zum Zylinder (1 i), in Richtung eines mittleren Bereiches des Zylinders, ein Rohrelement (14) ragt, in dessen Innerem, axial verschiebbar (15s), mit einem bestimmten Spiel (2t), eine Anzeigestange (15) gelagert ist, wobei auf einen Kopf (15a) an einem Ende dieser Stange (15) eine, in einem Sitz (14a) am inneren Endes des Rohrelements (14) eingesetzte, Feder (16) wirkt, während das gegenüberliegende Ende des Stabes, bei komprimierter Feder (15a), bündig in die Ebene der Außenfläche des Kopfes (1j) des Zylinders oder darüber hinaus ragt und dass außen am selben Rohrelement (14) der Kolben (2i) läuft welcher, auf der Seite des Rohrelementes (14), einen rohrförmigen koaxialen offenen Ansatz (2j) und, auf der Seite des Hubraumes (11s) mit isolierendem Öl, einen rohrförmigen koaxialen geschlossenen Ansatz (2k) aufweist.

5. Hydraulischer Adapter gemäß Anspruch 1, **dadurch gekennzeichnet, dass** der Kolben (1 i) zwischen den Dichtungen (2x) für das nicht isolierende Öl und den Dichtungen (2y) für das isolierende Öl, eine ringförmige Rille (2m) aufweist welche, mittels mindestens einer radialen Bohrung (2n), mit einem zylindrischen Innenraum (2z) des Kolbens (2i) und der beiden rohrförmigen Ansätze (2j, 2k) des Kolbens verbunden ist und dass dieser zylindrische Innenraum (2z), über das Spiel (2t) und/oder über eine oder mehrere Längsrillen an der Anzeigestange (15) und/oder an der Innenfläche der Bohrung für die Lagerung der besagten Stange im Rohrelement (14), mit außen verbunden ist.

6. Hydraulischer Adapter gemäß Anspruch 1, **dadurch gekennzeichnet, dass** die projizierte Fläche des Kolbens (2i) welche dem Druck des nicht isolierenden, von der Pumpe (P) bewegten, Öls ausgesetzt ist, in Bezug auf die projizierte Fläche des selben Kolbens welche im Hubraum (11s) auf das isolierende Öl wirkt, kleiner ist.

7. Hydraulischer Adapter gemäß Anspruch 1, **dadurch gekennzeichnet, dass** im Inneren des Hubraumes (11s) mit isolierendem Öl eine Druckfeder (16p) vorgesehen ist welche zwischen der Kopfwand (1 k) des Zylinders (1i) und dem Kolben (2i) wirkt.

8. Hydraulischer Adapter gemäß Anspruch 1, **dadurch gekennzeichnet, dass** der Hubraum (11s) für das elektrisch isolierende Öl mit einem Manometer (M) ausgestattet ist.

9. Hydraulischer Adapter gemäß Anspruch 1, **dadurch gekennzeichnet, dass** der Hubraum (11s) für das elektrisch isolierende Öl mit einem tarierten Sicherheitsventil (V) ausgestattet ist.

## Claims

1. A hydraulic adaptor for the safe operation, using oleodynamic pumps, of cable-cutting heads, crimping heads or other such tool heads which meet the electrical safety requirements and which are placed onto cables that might carry a voltage, wherein the adapter (D, D1) consists of a one-piece or composite vessel (1, 1s; 1i / 10, 10s) which is divided internally, by means of a scaling one-piece or composite piston (2, 2s; 22; 2i) that slides freely or by means of an elastically deformable membrane (9), into two cylinder volumes (11, 11s) which arc coaxial with one another, **characterized in that** one (11) of these cylinder volumes (11, 11s) is supplied with non-electrocally-insulating oil by a pump (P), while the other (11s) is filled with electrically insulating oil and is connected Lo an interchangeable tool head (T) via a safety connection hose (7s).

2. The hydraulic adapter according to claim 1, **characterized in that** the vessel of the adapter (D) is composed of a single cylinder (1i) or of two cylinders (1, 1s) which are coaxial with one another, **in that** a one-piece piston (22, 2i) or a composite piston (2, 2s) slides inside the vessel along the longitudinal axis of the vessel, and **in that**, in the case of the composite cylinder (1, 1s) and in the case of the composite piston (2, 2s), this may comprise an intermediate, electrically insulating element (4, 5).

3. The hydraulic adapter according to claim 1, **characterized in that** the vessel of the adapter (D1) consists of two connected shells (10, 10s) which are coaxial with one another, **in that** the membrane (9) is installed between the shells (10, 10s), and **in that** this membrane (9) is made of electrically insulating material.

4. The hydraulic adapter according to claim 1, **characterized in that** a tubular element (14) protrudes from the head (1j) of the cylinder (1i), on the side of the cylinder volume (11) containing insulating oil, coaxial with the cylinder (1i), toward a middle region of the cylinder, in the interior of which tubular element an indicator rod (15) is mounted with a certain clearance (2t) such as to be axially displaceable (15s), wherein a spring (16), which is inserted in a seat (14a) at the inner end of the tubular element (14), acts on a head (15a) at one end of said rod (15), while the opposite end of the rod, when the spring (15a) is compressed, lies flush in the plane of the outer surface of the head (1j) of the cylinder or protrudes beyond this, and **in that** the piston (2i) runs on the outside of Lhe same tubular element (14), said piston having a tubular, coaxial, open extension (2j) on the side of the tubular element (14) and a tubular, coaxial, closed extension (2k) on the side of the cylinder volume (11s) containing insulating oil.

5. The hydraulic adapter according to claim 1, **characterized in that** the piston (1i) has, between the seals (2x) for the non-insulating oil and the seals (2y) for the insulating oil, an annular groove (2m) which is connected to a cylindrical interior (2z) of the piston (2i) and of the two tubular extensions (2j, 2k) of the piston by means of at least one radial bore (2n), and **in that** this cylindrical interior (2z) is connected to the outside via the clearance (2t) and/or via one or more longitudinal grooves on the indicator rod (15) and/or on the inner surface of the bore for mounting said rod in the tubular element (14).

6. The hydraulic adapter according to claim 1, **characterized in that** the projected area of the piston (2i) which is exposed Lo the pressure of the non-insulating oil moved by the pump (P) is smaller than the projected area of the same piston which acts on the insulating oil in the cylinder volume (11s).

7. The hydraulic adapter according to claim 1, **characterized in that** there is provided inside Lhe cylinder volume (11s) containing insulating oil a compression spring (16p) which acts between the head wall (1k) of the cylinder (1!) and the piston (2i).

8. The hydraulic adapter according to claim 1, **characterized in that** the cylinder volume (11s) for the electrically insulating oil is equipped with a manometer (M).

9. The hydraulic adapter according to claim 1, **characterized in that** the cylinder volume (11s) for the electrically insulating oil is equipped with a tared safety valve (V).

## Revendications

1. Adaptateur hydraulique permettant, par l'intermédiaire d'une pompe oléodynamique, d'assurer la sécurité de fonctionnement de têtes de coupe-câble, de presse ou d'outils similaires satisfaisant aux réglementations de sécurité électrique en vigueur est placées sur des câbles éventuellement sous tension, l'adaptateur (D, D1) étant constitué d'un récipient monobloc ou assemblé (1, 1s; 1i/ 10, 10s) dont l'intérieur est divisé en deux cylindrées coaxiales (1 1, 11s) par un piston d'étanchéité librement coulissant monobloc ou assemblé (2, 2s ; 22 ; 2i) ou par une membrane élastiquement déformable, **caractérisé en ce que** l'une (11) de ces cylindrées (11, 11s) est alimentée par une pompe (P) en huile non électriquement isolante tandis que l'autre (11s) est remplie d'huile électriquement isolante et est reliée à unc tête d'outil interchangeable (T) par un flexible de raccordement de sécurité (7s).

2. Adaptateur hydraulique selon la revendication 1, **caractérisé en ce que** le récipient de l'adaptateur (D) et constitué d'un cylindre unique (1i) ou de deux cylindres coaxiaux (1, 1s), **en ce que** le récipient renferme un piston monobloc (22, 2i) ou assemblé (2, 2s) coulissant selon l'axe longitudinal du récipient, et **en ce que**, dans le cas du cylindre assemblé (1, 1s) et dans le cas du piston assemblé (2, 2s), celui-ci peut inclure un élément électriquement isolant (4, 5) entre les deux.

3. Adaptateur hydrautiquc selon la revendication 1, **caractérisé en ce que** le récipient de l'adaptateur (D1) est constitué de deux calottes (10, 10s) reliées de maniére coaxiale, **en ce que** la membrane (9) est montée entre les calottes (10, 10s) et **en ce que** cette membrane (9) est en matériau électriquement isolant.

4. Adaptateur hydraulique selon la revendication 1, **caractérisé en ce que**, depuis à tête (1j) du cylindre (1i) du côté de la cylindrée (11) renfermant l'huile isolante, coaxialement au cylindre (1i), jusqu'à une partie intermédiaire du cylindre, un élément tubulaire (14) dépasse, à l'intérieur duquel se trouve une tige indicatrice (15) déplaçable axialement (15s), avec un certain jeu (2t), un ressort (16) inséré dans un logement (14a) situé à l'extrémité intérieure de l'élément tubulaire (14) agissant sur une tête (15a) à l'une des extrémités de cette tige (15), tandis que l'extrémité opposée de la tige, le ressort (15a) étant comprimé, est alignée sur le même plan que la surface extérieure de la tête (1j) du cylindre ou bien la dépasse, et **en ce que**, à l'extérieur du même élément tubulaire (14), le piston (2i) fonctionne et présente, du côté de l'élément tubulaire (14), une embase tubulaire coaxialement ouverte (2j) et, du côté de la cylindrée (11s) comprenant l'huile isolante, une embase tubulaire coaxialement fermée (2k).

5. Adaptateur hydraulique selon la revendication 1, **caractérisé en ce que** le piston (1i) situé entre les joints (2x) pour l'huile non isolante et les joints (2y) pour l'huile isolante, présente une rainure annulaire (2m) reliée au moins par un trou radial (2n) à une chambre cylindrique (2z) du piston (2i) et aux deux embases tribulaires (2j, 2k) du piston, et **en ce que** cette chambre cylindrique (2z) est reliée à l'extérieur par le jeu (2t) et/ou par une ou plusieurs rainures longitudinales sur la tige indicatrice (15) et/ou sur le surface intérieure du trou de logement de ladite tige à l'intérieur de l'élément tubulaire (14).

6. Adaptateur hydraulique selon la revendication 1, **caractérisé en ce que** la surface projetée du piston (2i) soumise à la pression de l'huile non isolante alimentée par la pompe (P) est plus petite que la surface projetée du même piston agissant sur l'huile isolante dans la cylindrée (11s).

7. Adaptateur hydraulique selon la revendication 1, **caractérisé en ce qu'**un ressort de compression (16p) est prévu à l'intérieur de la cylindrée (1 1s) renfermant l'huile isolante et agit entre la paroi de tête (1k) du cylindre (1i) et le piston (2i).

8. Adaptateur hydraulique selon la revendication 1, **caractérisé en ce que** la cylindrée (11s) pour l'huile électriquement isolante est équipée d'un manomètre (M).

9. Adaptateur hydraulique selon la revendication 1, **caractérisé en ce que** la cylindrée (11s) pour l'huile électriquement isolante est équipée d'une vanne de sécurité (V) tarée.
